# DEMANDE DE BREVET EUROPEEN

(11) **EP 1 302 629 A1**
(43) Date de publication de la demande: **16.04.2003**
(21) Numéro de dépôt: 01870220.9
(22) Date de dépôt: 12.10.2001
(51) Int. Cl.: F01D 9/04, F04D 29/54

(54) **Etage redresseur d'un compresseur comprenant des aubes fixes et procédé de montage des aubes fixes**

(71) Demandeur: Techspace Aero S.A., 4041 Herstal (BE)
(72) Inventeur: Bos, Mathieu, 3520 Zonhoven (BE)
(74) Mandataire: Van Malderen, Joelle

(57) **Abrégé**

La présente invention se rapporte à un étage redresseur (2) d'un compresseur comprenant une virole extérieure (5) et une virole intérieure (4), toutes deux concentriques et de préférence circulaires et reliées l'une à l'autre par une série d'aubes fixes (60,61,62,...), lesdites viroles intérieure (4) et extérieure (5) comprenant chacune un côté fonctionnel (500) et un côté non fonctionnel (501), ledit étage redresseur étant caractérisé en ce que la virole extérieure (5) et/ou la virole intérieure (4) est pourvue de lumières ou ajours (50,51,52,...) qui permettent le passage d'une des extrémités (600) desdites aubes (60,61,62,...) à travers ces lumières ou ajours (50,51,52,...), et en ce que les aubes (60,61,62,...) présentent à cette extrémité (600) des moyens propres (601,603 ;601,604) susceptibles d'être déformés et capables à eux seuls de solidariser lesdites aubes à ladite virole extérieure (5) au niveau desdites lumières ou desdits ajours.

## Description

### Objet de l'invention

La présente invention se rapporte à un étage redresseur d'un compresseur coaxial, ledit étage comprenant deux viroles extérieure et intérieure concentriques reliées entre elles par une succession d'aubes fixes.

La présente invention se rapporte également à un procédé de montage des aubes fixes sur ladite virole intérieure et/ou extérieure.

### Etat de la technique

Les compresseurs coaxiaux sont utilisés notamment en aéronautique dans les moteurs double-corps, turbofans ou turboréacteurs. Ils sont constitués d'une succession d'étages redresseurs ou statoriques séparés par des étages rotoriques.

Un étage redresseur a pour fonction de repositionner (redresser) le vecteur vitesse du fluide sortant de l'étage rotorique précédent avant de l'envoyer vers l'étage rotorique suivant.

Chaque étage redresseur comprend des aubes fixes ou aubes redresseurs reliant une virole intérieure à une virole extérieure, lesdites viroles intérieure et extérieure étant concentriques.

Un problème important associé à l'utilisation de ces compresseurs est qu'il convient, au niveau des étages redresseurs, de solidariser de manière efficace lesdites aubes redresseurs aux viroles intérieure et extérieure. Cette solidarisation doit être optimale de manière à résister à des accidents tels que le bris d'une aube ou l'ingestion d'un corps étranger tel qu'un oiseau dans le turboréacteur. De plus, cette solidarisation doit minimiser le déplacement des aubes par rapport aux viroles qui provoque avec le temps une usure importante et donc un cric de fatigue qui peut provoquer le bris desdites aubes ou même de la virole.

Habituellement, on solidarise les aubes redresseurs aux viroles extérieure et intérieure par des rivets, des boulons ou des soudures. Néanmoins, le recours à ces moyens externes de solidarisation présente l'inconvénient majeur de perturber le flux au sein du turboréacteur et de générer une perte de charge dans la veine aérodynamique.

Le document US-A-2 812 159 propose un dispositif d'assemblage des aubes comprenant une série de pièces en forme de U avec chacune une perforation dans le fond du U dans laquelle est emboîtée l'extrémité libre des aubes, cet assemblage étant sécurisé par des moyens de fixation comprenant entre autre des vis et qui sont adaptés pour éviter les déplacements latéraux et axiaux des aubes. Pour autant, ce dispositif d'assemblage ne permet pas de résoudre le problème de la perturbation du flux dans le turboréacteur associé à l'utilisation de vis et autres moyens de fixation similaires.

Il a également été proposé dans le document GB-A-732 919, d'utiliser un dispositif d'assemblage des aubes dans lequel les aubes sont assemblées les unes aux autres par l'intermédiaire d'une feuille de métal traversant les aubes et servant de structure de support, et par l'intermédiaire d'un bandeau associé à un câble, placé au-dessus de ladite feuille de métal, et qui traverse l'ensemble des aubes, ce type d'assemblage nécessitant plusieurs pièces accessoires pour sa mise en oeuvre. En outre, la présence d'un arrêt de sécurité à pointage de soudure fragilise l'ensemble.

### Buts de l'invention

La présente invention vise à fournir une solution qui permette de solidariser les aubes aux viroles intérieure et extérieure au sein d'un étage redresseur d'un compresseur coaxial.

La présente invention vise en particulier à proposer une solution dans laquelle la veine aérodynamique du flux n'est pas altérée par la présence de soudures ou de rivets au niveau de la virole.

Un autre but de la présente invention est de proposer une solution qui soit d'une grande simplicité de montage et d'un entretien aisé.

La présente invention vise également à proposer une solution dont la réalisation et la mise en oeuvre soient d'un coût raisonnable par rapport aux solutions proposées dans l'état de la technique.

### Résumé de l'invention

La présente invention se rapporte à un étage redresseur d'un compresseur comprenant une virole extérieure et une virole intérieure, toutes deux concentriques et de préférence circulaires et reliées l'une à l'autre par une série d'aubes fixes, lesdites viroles intérieure et extérieure comprenant chacune un côté fonctionnel et un côté non fonctionnel, ledit étage redresseur étant caractérisé en ce que la virole extérieure et/ou la virole intérieure est pourvue de lumières ou ajours qui permettent le passage d'une des extrémités desdites aubes à travers ces lumières ou ajours, et en ce que les aubes présentent à cette extrémité des moyens propres susceptibles d'être déformés et capables à eux seuls de solidariser lesdites aubes à ladite virole extérieure au niveau desdites lumières ou desdits ajours.

Avantageusement, ladite extrémité au niveau de chaque aube comprend une zone proximale et une zone distale et lesdits moyens propres situés au niveau de ladite extrémité de chaque aube sont constitués par un couple d'un premier élément et d'un deuxième élément capables de coopérer ensemble pour assurer la solidarisation de l'aube à la virole extérieure, le premier élément étant situé au niveau de la zone proximale de l'extrémité de l'aube et correspondant à une rainure capable de s'emboîter dans une lumière ou ajour de la virole extérieure, du côté fonctionnel de ladite virole extérieure, le deuxième élément étant situé au niveau de la zone distale de l'extrémité de l'aube et correspondant à ladite zone distale elle-même, ladite zone distale étant constituée d'un matériau résilient tel que ladite zone distale est capable de se déformer de façon à bloquer la fixation de l'aube du côté non fonctionnel de la virole extérieure.

Selon une première forme d'exécution, ladite rainure correspond à une lumière ou ajour à l'intérieur de la zone proximale.

Selon une autre forme d'exécution, ladite rainure correspond à une partie évidée vers l'extérieur (sur le bord) de la zone proximale et qui forme un tenon.

La présente invention se rapporte également à un procédé de montage, au niveau d'un étage redresseur, ledit étage redresseur comprenant une virole extérieure et une virole intérieure, toutes deux concentriques et de préférence circulaires et reliées l'une à l'autre par une série d'aubes fixes, d'une aube fixe à au moins une des viroles intérieure ou extérieure, ladite virole intérieure ou extérieure étant pourvue de lumières ou ajours et ladite aube comprenant à une de ses extrémités des moyens propres capables à eux seuls de solidariser l'aube à ladite virole intérieure ou extérieure, lesdits moyens étant constitués par une rainure située au niveau de la zone proximale de l'extrémité de l'aube et par la zone distale de ladite extrémité de l'aube, ledit procédé de montage comprenant les étapes suivantes :
- on fait pénétrer l'extrémité de l'aube dans une lumière ou ajour de la virole intérieure ou extérieure en faisant entrer ladite extrémité par le côté fonctionnel de ladite virole intérieure ou extérieure, de manière à faire ressortir la zone proximale de l'extrémité de l'aube du côté fonctionnel de la virole intérieure ou extérieure, et à laisser dépasser la zone distale de ladite extrémité de l'aube du côté non fonctionnel de la virole intérieure ou extérieure,
- on laisse glisser l'aube le long de son grand axe jusqu'à ce que la rainure de la zone proximale de l'extrémité de l'aube vienne s'emboîter dans la lumière ou ajour de la virole intérieure ou extérieure, du côté fonctionnel de la virole intérieure ou extérieure,
- on provoque une déformation de la zone distale de l'extrémité de l'aube de manière à bloquer l'aube au niveau de l'ajour de la virole intérieure ou extérieure, du côté non fonctionnel de ladite virole intérieure ou extérieure.

De manière avantageuse, la zone distale de l'extrémité de l'aube est déformée par un traitement mécanique, éventuellement associé à un traitement thermique ou chimique.

Selon une forme d'exécution préférée, la rainure correspond à une lumière ou ajour usinée à l'intérieur de la zone proximale.

Selon une autre forme d'exécution préférée, la rainure correspond à une partie évidée vers l'extérieur (sur le bord) de la zone proximale usinée de manière à former un tenon.

### Brève description des figures

La figure 1 représente une vue générale de l'étage compresseur d'un turbofan.

La figure 2 représente une première forme d'exécution de la présente invention pour solidariser des aubes fixes à la virole intérieure ou à la virole extérieure d'un étage compresseur d'un turbofan.

La figure 3 représente une deuxième forme d'exécution de la présente invention pour solidariser des aubes fixes à la virole intérieure ou à la virole extérieure d'un étage compresseur d'un turbofan.

### Description détaillée de l'invention

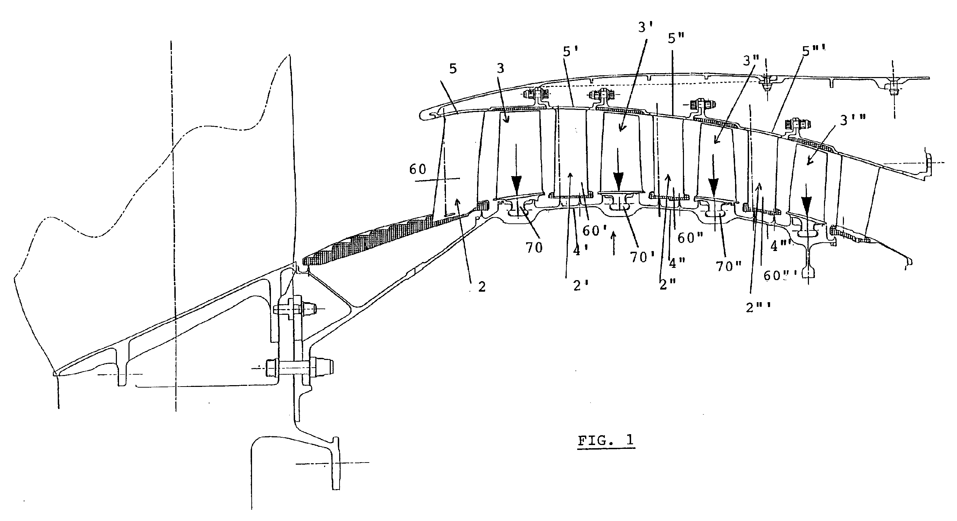

Comme illustré à la figure 1, l'étage de compression d'un turbofan est composé d'une série d'étages rotoriques 3,3',3",... alternant avec une série d'étages statoriques ou redresseurs 2,2',2",...

Pour chaque étage, on ne représente en coupe que la première aube 70, 70', 70" ou 60, 60', 60" à la Fig. 1.

Tandis que chaque étage rotorique 3,3',3",... comprend une série d'aubes mobiles 70,71,72,... , chaque étage redresseur ou statorique 2,2',2",... comprend une série d'aubes fixes respectivement 60,61,62,...

Chaque étage redresseur 2,2',2",... comprend en outre une virole intérieure respectivement 4,4' ou 4",... reliée à une virole extérieure respectivement 5,5' ou 5",... par la série d'aubes fixes respectivement 60,61,62, 60',61',62' ou 60",61",62", ... Lesdites viroles intérieures 4,4',4",... et lesdites viroles extérieures 5,5',5",... sont donc propres à chacun des étages redresseurs 2,2',2",...

Lesdites viroles intérieures 4,4',4",... et lesdites viroles extérieures 5,5',5",... se présentent sous la forme de tôles métalliques en forme de bagues tandis que les séries d'aubes fixes 60,61,62,... correspondent à des tôles métalliques reliant radialement une virole intérieure à une virole extérieure.

Lorsque le turbofan fonctionne, le gaz traverse d'abord le premier étage redresseur 2 du compresseur où son vecteur vitesse est repositionné afin d'être entraîné par le premier étage rotorique d'aubes tournantes 3 avant de rejoindre le deuxième étage redresseur 2' pour être à nouveau repositionné en 3', etc. Le gaz subit ainsi un cycle d'entraînement - repositionnement à l'issue duquel son énergie cinétique diminue progressivement tandis que sa pression croît.

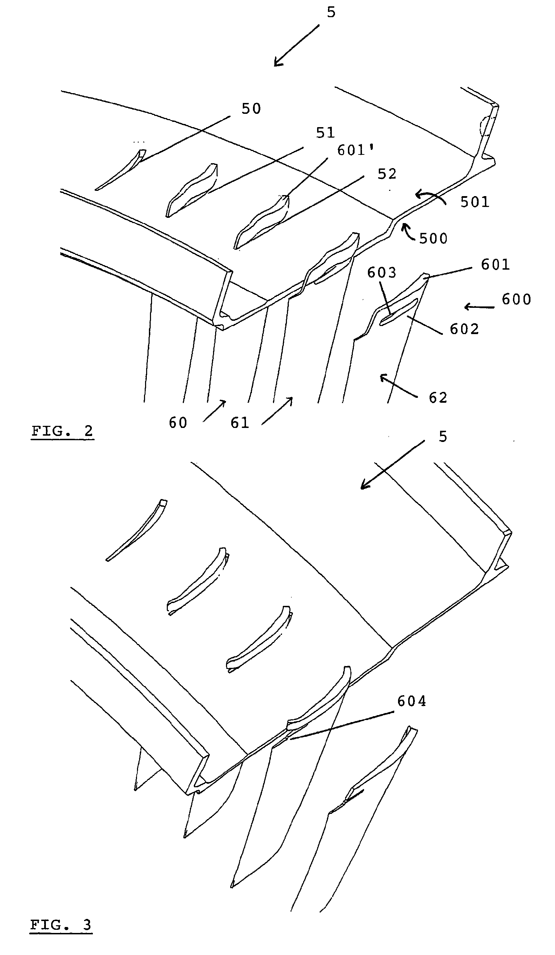

Une première forme préférée d'exécution du dispositif de solidarisation des aubes fixes aux viroles selon la présente invention est illustrée à la figure 2. On notera que cette figure concerne la solidarisation des aubes fixes 60,61,62,... à la virole extérieure 5, mais que le même dispositif de solidarisation peut être prévu pour solidariser les aubes fixes 60,61,62,... à la virole intérieure 4.

Plus précisément, la virole extérieure 5 un côté ou une face dit fonctionnel 500 et un côté ou une face dit non fonctionnel 501, le côté ou la face dit fonctionnel 50 correspondant au côté dirigé vers la virole intérieure.

La virole extérieure 5 présente une série de lumière ou ajours 50,51,52,... destinées à recevoir les aubes fixes 60,61,62,...

Parallèlement, chaque aube fixe 60,61,62,... présente à une de ses extrémités longitudinales 600, une zone distale 601 et une zone proximale 602.

La zone proximale 602 comprend une rainure qui correspond ici à une partie évidée 603 à l'intérieur de la zone proximale 602. La conformation de ladite rainure 603 est telle qu'elle est capable de s'emboîter dans la lumière ou ajour 50 de la virole extérieure 5.

La zone distale 601 est quant à elle constituée d'un matériau résilient tel qu'il est capable d'être déformé par un traitement mécanique, éventuellement associé à un traitement thermique ou chimique.

La zone distale 601 et la rainure 603 au niveau de la zone proximale 602 de l'aube fixe 60 constituent les moyens propres de solidarisation de l'aube fixe 60 à la virole extérieure 5 au niveau de la lumière ou ajour 50.

Concrètement, pour procéder à la solidarisation de l'aube fixe 60 à la virole extérieure 5, on fait pénétrer l'aube fixe 60 par son extrémité 600 dans l'ajour 50 de la virole extérieure 5, l'aube fixe 60 entrant dans l'ajour 50 par le côté fonctionnel 500 de la virole extérieure 5, et son extrémité 600, avec sa zone proximale 602 et sa zone distale 601, ressortant du côté non fonctionnel 501 de la virole extérieure 5.

On exerce ensuite mouvement de pression sur l'extrémité 600 de l'aube 60, ce qui a pour effet de positionner et d'emboîter la rainure 603 dans l'ajour 50 de la virole extérieure 5, seule la zone distale 601 restant du côté non fonctionnel 501 de la virole 5.

On traite alors la zone distale 601 de l'aube 60 de façon à provoquer sa déformation qui reste très localisée.

La zone distale ainsi déformée 601' permet de bloquer l'aube fixe 60 par rapport à la virole extérieure 5.

Selon une seconde forme préférée d'exécution de la présente invention illustrée à la figure 3, la rainure prend la forme d'une partie évidée 604 sur le bord de la zone proximale 602 de l'aube fixe 60 qui forme un tenon.

## Revendications

1. Etage redresseur (2) d'un compresseur comprenant une virole extérieure (5) et une virole intérieure (4), toutes deux concentriques et de préférence circulaires et reliées l'une à l'autre par une série d'aubes fixes (60,61,62,...), lesdites viroles intérieure (4) et extérieure (5) comprenant chacune un côté fonctionnel (500) et un côté non fonctionnel (501), ledit étage redresseur étant **caractérisé en ce que** la virole extérieure (5) et/ou la virole intérieure (4) est pourvue de lumières ou ajours (50,51,52,...) qui permettent le passage d'une des extrémités (600) desdites aubes (60,61,62,...) à travers ces lumières ou ajours (50,51,52,...), et **en ce que** les aubes (60,61,62,...) présentent à cette extrémité (600) des moyens propres (601,603 ;601,604) susceptibles d'être déformés et capables à eux seuls de solidariser lesdites aubes à ladite virole extérieure (5) au niveau desdites lumières ou desdits ajours.

2. Etage redresseur selon la revendication 1, **caractérisé en ce que**, ladite extrémité au niveau de chaque aube (60,61,62,...) comprenant une zone proximale (602) et une zone distale (601, 601'), lesdits moyens propres (601, 603 ;601,604) situés au niveau de ladite extrémité de chaque aube (60,61,62,...) sont constitués par un couple d'un premier élément et d'un deuxième élément capables de coopérer ensemble pour assurer la solidarisation de l'aube à la virole extérieure (5), le premier élément étant situé au niveau de la zone proximale (602) de l'extrémité de l'aube (60,61,62,...) et correspondant à une rainure (603,604) capable de s'emboîter dans une lumière ou ajour (50,51,52,...) de la virole extérieure (5), du côté fonctionnel (500) de ladite virole extérieure (5), le deuxième élément étant situé au niveau de la zone distale (601) de l'extrémité de l'aube et correspondant à ladite zone distale elle-même (601), ladite zone distale étant constituée d'un matériau résilient tel que ladite zone distale (601) est capable de se déformer de façon à bloquer la fixation de l'aube (60,61,62,...) du côté non fonctionnel (501) de la virole extérieure (5).

3. Etage redresseur selon la revendication 2, **caractérisé en ce que** ladite rainure correspond à une lumière ou ajour (603) à l'intérieur de la zone proximale (602).

4. Etage redresseur selon la revendication 2, **caractérisé en ce que** ladite rainure correspond à une partie évidée (604) vers l'extérieur (sur le bord) de la zone proximale (602) et qui forme un tenon.

5. Procédé de montage, au niveau d'un étage redresseur, ledit étage redresseur comprenant une virole extérieure (5) et une virole intérieure (4), toutes deux concentriques et de préférence circulaires et reliées l'une à l'autre par une série d'aubes fixes (60,61,62,...), d'une aube fixe (60,61,62,...) à au moins une des viroles intérieure (4) ou extérieure (4), ladite virole intérieure (4) ou extérieure (5) étant pourvue de lumières ou ajours (50,51,52,...) et ladite aube (60,61,62,...) comprenant à une de ses extrémités (600) des moyens propres (601,603 ;601,604) capables à eux seuls de solidariser l'aube à ladite virole intérieure (4) ou extérieure (5), lesdits moyens (601,603 ;601,604) étant constitués par une rainure (603,604) située au niveau de la zone proximale (602) de l'extrémité (600) de l'aube (60,61,62,...) et par la zone distale (601) de ladite extrémité (600) de l'aube (60,61,62,...), ledit procédé de montage comprenant les étapes suivantes :
- on fait pénétrer l'extrémité (600) de l'aube (60,61,62,...) dans une lumière ou ajour (50,51,52,...) de la virole intérieure (4) ou extérieure (5) en faisant entrer ladite extrémité (600) par le côté fonctionnel (500) de ladite virole intérieure (4) ou extérieure (5), de manière à faire ressortir la zone proximale (602) de l'extrémité (600) de l'aube (60,61,62,...) du côté fonctionnel de la virole intérieure ou extérieure, et à laisser dépasser la zone distale (601) de ladite extrémité (600) de l'aube (60,61,62,...) du côté non fonctionnel (501) de la virole intérieure (4) ou extérieure (5),
- on laisse glisser l'aube (60,61,62,...) le long de son grand axe jusqu'à ce que la rainure (603, 604) de la zone proximale (602) de l'extrémité de l'aube (60,61,62,...) vienne s'emboîter dans la lumière ou ajour (50,51,52,...) de la virole intérieure ou extérieure, du côté fonctionnel de la virole intérieure(4) ou extérieure (5),
- on provoque une déformation de la zone distale (601) de l'extrémité (600) de l'aube (60,61,62,...) de manière à bloquer l'aube (60,61,62,...) au niveau de l'ajour (50,51,52,...) de la virole intérieure (4) ou extérieure (5), du côté non fonctionnel (501) de ladite virole intérieure(4) ou extérieure (5).

6. Procédé selon la revendication 5, **caractérisé en ce que** la zone distale (601) de l'extrémité (600) de l'aube (60,61,62,...) est déformée par un traitement mécanique, éventuellement associé à un traitement thermique ou chimique.

7. Procédé selon la revendication 5 ou 6, **caractérisé en ce que** la rainure correspond à une lumière ou ajour (603) usinée à l'intérieur de la zone proximale.

8. Procédé selon la revendication 5 ou 6, **caractérisé en ce que** la rainure correspond à une partie évidée (604) vers l'extérieur (sur le bord) de la zone proximale usinée de manière à former un tenon.
